# EUROPEAN PATENT SPECIFICATION

(11) **EP 2 161 164 B1**
(45) Date of publication and mention of the grant of the patent: **25.09.2013**
(21) Application number: 08015528.6
(22) Date of filing: 03.09.2008
(51) Int. Cl.: B60R 21/0136

(54) **Vehicle occupant safety system**
Sicherheitssystem für Fahrzeuginsassen
Système de sécurité d'un occupant de véhicule

(43) Date of publication of application: 10.03.2010
(73) Proprietor: Autoliv Development AB, 447 83 Vårgårda (SE)
(72) Inventor: Himiläinen, Mika, 51332 Fristad (SE); Lenning, Anders, 43497 Kungsbacka (SE)
(74) Representative: Müller Verweyen

(56) References cited:
- EP-A- 1 705 081
- US-A1- 2008 195 261

## Description

The invention relates to a vehicle occupant safety system ar ranged to transmit information to an external emergency unit after a vehicle impact.

WO 2007 097689 describes a safety system for a vehicle, which is arranged to send an emergency message using a communication system after a crash has been detected, where the emergency message comprises the position of the vehicle as determined by a positioning system. The emergency message may also comprise supplemental information such as identification of the particular crash sensors that have been triggered or of the on-board safety systems that have been activated, and information regarding the number of occupants in the vehicle. However, this information is not as detailed as needed, for example it is not possible to obtain information on the injury status of the occupants.

US 6 166 656 discloses an emergency assistance system adapted to send measured health check data to a fire station and ambulance through an external communicator after a crash. The health check data comprises the blood pressure, pulse and body temperature of an occupant measured after insertion of a finger into a tube sensor. However, an injured or shocked person may be unable to insert a finger into a tube sensor in a post-crash situation. Furthermore, dilation of pupils and physical injury may be visually identified by means of an optical on-board camera. Such a camera system is expensive and requires that the occupant is in the field of view after the crash.

DE 10 2004 016 191 A1 discloses a restraint system with a restraint belt comprising a motion sensor adapted to measure the activity of the chest giving information about the breathing rate and/or the heart rate. The measured information on the breathing rate and/or the heart rate may be automatically transmitted to a rescue station. However, incorporation of a motion sensor and corresponding signal lines into the seat belt webbing causes significant additional costs and may also be uncomfortable for the occupant. Furthermore, malfunction of the system is possible if the position of the occupant after the crash is such that the part of the belt with the motion sensor has no contact to the chest or the belly of the occupant.

US 2008 0195261 A1 discloses a generic vehicle occupant safety system comprising a telematics communication device for transmitting information measured by various vehicle-mounted sensors to a remote site after a vehicle crash.

It is the object of the invention to provide a reliable and cost-effective safety system providing rescue personnel with information on the injury status of the occupants after a crash.

The invention solves this object with the features of claim 1. It has been realized that information allowing to estimate the injury status of an occupant can be obtained from pre-determined parameter values of the seat belt system, as will be explained in detail in the following.

The length of the belt paid-out from the retractor before impact, in combination with information from a seat position sensor, indicates the girth of an occupant sitting in a normal position. The girth of the occupant can be used to calculate the force applied to the chest of the occupant by a force applied to the seat belt as shall be explained below. Furthermore, the length of the paid-out belt can indicate an off-normal position of the occupant with an enhanced risk of injury, for example in case the occupant was leaning forward at the time of impact.

The force which is used to drive the pretensioner is usually pre-determined. The pretensioning force applied to the belt is related to the pretensioner driving force via the belt bobbin diameter and the momentum arm of the pretensioner coupling to the belt spindle. The bobbin diameter depends on the length of the paid-out belt which can be measured. Alternatively an average value can be used. The force applied to the chest of the occupant depends on the girth and seat position of the occupant, and can be calculated from the force applied to the belt using the angle of the belt at the deflection point at the pretensioner side relative to the connecting line between the two deflection points. This angle can for example be calculated from the measured length of the paid-out belt. Alternatively, an average value can be used. The force applied to the chest of the occupant may be of interest for example to indicate a possible chest injury, e.g. rib fracture, especially for elderly occupants.

The belt length withdrawn in the pretensioner action indicates the amount of slack in the belt at the time of impact. A large amount of slack indicates a higher injury risk because it permits the occupant to move a distance before the belt can act on the occupant. A large belt length withdrawn in the pretensioner action may also indicate a relatively weak constitution of the occupant's chest, for example in the case of an elderly occupant.

The limiting force which is a characteristic of the force limiter is usually pre-determined. The limiting force applied to the belt depends on the belt bobbin diameter. The belt bobbin diameter depends on the length of the paid-out belt, as discussed above for the pretensioned. The force applied to the chest of the occupant depends on the girth and seat position of the occupant, and can be calculated from the force applied to the belt as discussed above for the pretensioner. The length of belt paid-out during the force-limited belt withdrawal of the belt allows to estimate the probability that the occupant has impacted the interior of the vehicle. Furthermore several impacts may be discovered if several pay-out actions are determined. The weight of the occupant can be calculated from the pay-out characteristic, i.e. the retracting force applied by the seat-belt to the occupant during the force-limited belt withdrawal compared to the vehicle deceleration. The amount of energy that has been absorbed in the belt system can be calculated from the force applied by the seat-belt to the occupant during the force-limited belt withdrawal integrated over the displacement of the occupant. The absorbed energy provides information on the vehicle impact force, i.e. the heaviness of the impact.

A signal from a buckle sensor confirming connection between the buckle and the locking tongue indicates belt usage by the occupant to the rescue personnel.

Certain parameter values are pre-determined for any particular seat belt system. Parameters which are variable for a specific seat belt system can automatically be measured with relatively simple sensors, which may be present anyway in the seatbelt system for other purposes, in particular in the buckle, locking tongue, retractor, pretensioner and/or force limiter. Unlike sensors directly measuring biological parameters of the occupant, for example the heart or breathing activity, parameter values of the seat-belt system do not depend on the post-crash position or orientation of the occupant. Furthermore, a cost-intensive modification of the seat belt webbing is not required.

The invention shall be illustrated in the following using advantageous embodiments with reference to the attached drawings, in which:
- Fig. 1: shows a schematic view of a vehicle occupant safety system; and
- Fig. 2: shows a schematic view of a retractor.

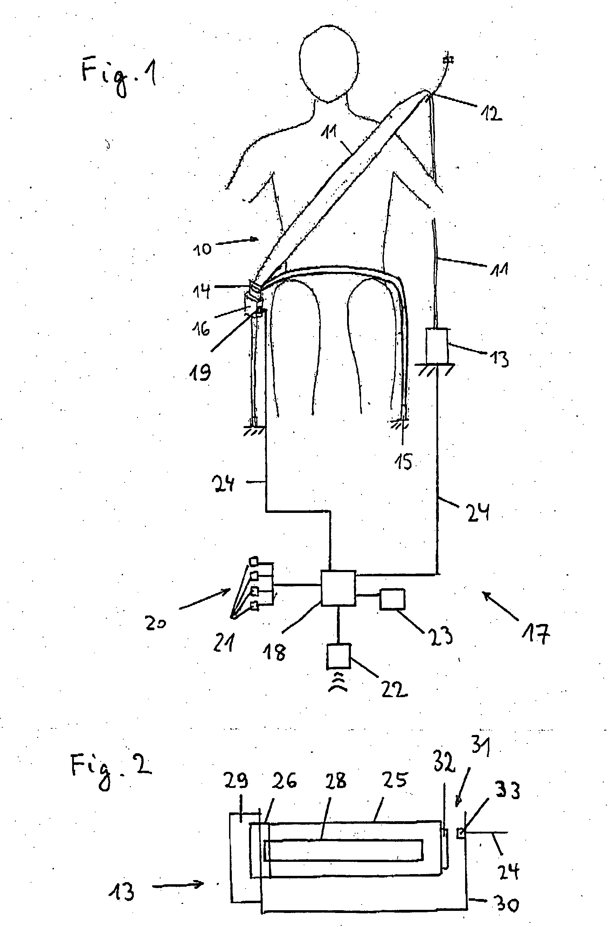

The vehicle occupant safety system 17 according to Fig. 1 comprises a seat belt system 10 with a seat belt 11, a deflector 12, a retractor unit 13, a locking tongue 14, an end fitting 15 and a buckle 16 interacting with said locking tongue in a locking cooperation. The retractor unit 13 shown in more detail in Fig. 2 comprises a belt spindle 25 rotatably mounted in a casing 30, a profile head 26, a force limiting element formed by a torsion rod 28, a pretensioner 29 and a rotation sensor 31 comprising a signal inducing element 32 in the form of a coded magnetic disc and a signal generating element 33.

The safety system 17 furthermore comprises a signal processing unit 18 connected by signal lines 24 to the rotation sensor 31 in the retractor unit 13 and to a lock sensor 19 in the buckle 16, an impact sensor arrangement 20 comprising impact sensors 21 mounted to the vehicle chassis, a wireless transmitter 22 and a memory 23 for storing predetermined parameters of the seat belt system 10, such as the driving force of the pretensioner 29, the diameter of the belt spindle 25, the momentum arm of the coupling of the pretensioner 29 to the belt spindle 25 and/or the limiting force exerted by the force limiter 28, and the like; as well as previously measured parameters of the seat belt system 10, such as the length of the belt 11 paid-out from the retractor, the length of belt 11 withdrawn in the pretensioner action and/or a positive or negative value from the lock sensor 19. The memory 23 can be part of the signal processing unit 18. The wireless transmitter 22 may be based on radio transmission and can be part of an on-board communication system.

When the impact sensor arrangement 20 detects an impact of the vehicle due to a vehicle crash, a corresponding signal is transmitted to the signal processing unit 18. In response to this impact signal, the signal processing unit 18 automatically initiates the transmission of a message containing rescue support information through the wireless transmitter 22 to an external rescue unit, for example an emergency call station or an ambulance.

The transmitted information contains either parameter values of the seat belt system 10. The transmitted information may additionally contain information calculated or derived from parameter values of the seat belt system 10. Parameter values of the seat belt system 10 may be measured parameter values, and/or predetermined parameter values stored in the memory 23. Measured parameter values can be currently measured values requested by signal processing unit 18 from the sensors 19, 33 in the seat belt system 10 after deceiving an impact signal, or previously measured values stored in the memory 23. Examples of measured parameter values are the length of the belt paid-out from the retractor, the length of belt withdrawn in the pretensioner action and/or a positive or negative value from the lock sensor 19.

Information calculated or derived from parameter values of the seat belt system 10 which is of interest for the rescue personnel may comprise for example the girth of the occupant, the weight of the occupant, the force applied to the chest of the occupant, an off-normal position of the occupant, pre-crash slack in the seat belt 11, the probability that the occupant has impacted the interior of the vehicle, the amount of energy absorbed in the belt system 10 and/or usage of the seat belt 11 by the occupant. The invention is not limited to the particular information mentioned above; many other information useful for rescue personnel can be thought of.

## Claims

1. vehicle occupant safety system (17), comprising a seat belt system (10) with a force limiter (28), an impact sensor arrangement (20), a vehicle mounted wireless transmitter (22), and a signal processing unit (18) programmed to control, after receiving an impact signal from said impact sensor arrangement (20), said transmitter (22) to transmit information to an external receiver, wherein said signal processing unit (18) is programmed to generate said information to be transmitted on the basis of parameter values of the seat belt system (10), **characterized in that** said parameter values comprise pre-determined parameter values, and **in that** said signal processing unit (18) is programmed to generate said information to be transmitted to contain, as a pre-determined parameter value, the load limiting force applied by and being a characteristic of the force limiter (28) of the seatbelt system (10).

2. Safety system according to claim 1, wherein said parameter values comprise further pre-determined parameter values.

3. Safety system according to claim 1 or 2, wherein said parameter values comprise measured parameter values.

4. Safety system according to any one of the preceding claims, wherein said seat belt system (10) comprises a retractor (13), a locking tongue (14), a buckle (16) and a pretensioner (29).

5. Safety system according to claim 4, wherein said parameter values comprise the length of the belt (11) paid out from the retractor (13) of the seatbelt system (10).

6. Safety system according to claim 4 or 5, wherein said parameter values comprise the length of the belt (11) withdrawn by the pretensioner (29) of the seatbelt system (10).

7. Safety system according to any one of claims 4 to 6,
wherein said parameter values comprise the pretensioning force applied by the pretensioner (29) of the seatbelt system (10).

8. Safety system according to any one of claims 4 to 7,
wherein said parameter values comprise a signal from a lock sensor (19) in the buckle (16) of the seatbelt system (10).

9. Safety system according to any one of claims 4 to 8,
wherein a sensing assembly (19, 33) for measuring at least one of said parameter values is connected to the buckle (16), the locking tongue (14), the retractor (13), the pretensioner (29) and/or the force limiter (28) of the seat belt system (10).

10. Safety system according to claim 9, wherein said sensing assembly (19, 33) comprises a belt pay-out sensor (33), in particular a rotation sensor measuring the rotation angle of a spindle (25) of the retractor (13).

11. Safety system according to claim 10, wherein said belt pay-out sensor (33) is connected to the retractor (13) of the seat belt system (10).

12. Safety system according to any one of claims 9 to 11,
wherein the sensing assembly (19, 33) comprises a buckle lock sensor (19).

13. Safety system according to any one of claims 4 to 12,
wherein the pretensioner (29) of the seat belt system (10) is mounted to the retractor (13) of the seatbelt system (10).

14. Safety system according to any one of claims 1-13, wherein the force limiter (28) of the seat belt system (10) is a torsion bar load limiter.

15. Motor vehicle comprising a safety system (17) according to any one of the preceding claims.

## Patentansprüche

1. Sicherheitssystem für Fahrzeuginsassen (17), umfassend ein Sicherheitsgurtsystem (10) mit einem Kraftbegrenzer (28), einer Aufprallsensoranordnung (20), einem im Fahrzeug eingebauten drahtlosen Sender (22) und einer Signalverarbeitungseinheit (18), die so programmiert ist, dass sie nach dem Empfangen eines Aufprallsignals von der Aufprallsensoranordnung (20) den Sender (22) so steuert, dass er Informationen an einen externen Empfänger sendet, wobei die Signalverarbeitungseinheit (18) so programmiert ist, dass sie die zu sendenden Informationen auf der Grundlage von Parameterwerten des Sicherheitsgurtsystems (10) erzeugt, **dadurch gekennzeichnet, dass** die Parameterwerte vorgegebene Parameterwerte umfassen, und dadurch, dass die Signalverarbeitungseinheit (18) so programmiert ist, dass sie die zu sendenden Informationen so erzeugt, dass sie als vorgegebenen Parameterwert die kraftbegrenzende Kraft enthalten, die von dem Kraftbegrenzer (28) des Sicherheitsgurtsystems (10) aufgebracht wird und ein Merkmal desselben ist.

2. Sicherheitssystem nach Anspruch 1, wobei die Parameterwerte weitere vorgegebene Parameterwerte umfassen.

3. Sicherheitssystem nach Anspruch 1 oder 2, wobei die Parameterwerte gemessene Parameterwerte umfassen.

4. Sicherheitssystem nach einem der vorhergehenden Ansprüche, wobei das Sicherheitsgurtsystem (10) einen Aufroller (13), eine Verschlusszunge (14), ein Schloss (16) und einen Gurtstraffer (29) umfasst.

5. Sicherheitssystem nach Anspruch 4, wobei die Parameterwerte die Länge des Gurts (11) umfassen, der von dem Aufroller (13) des Sicherheitsgurtsystems (10) abgerollt wird.

6. Sicherheitssystem nach Anspruch 4 oder 5, wobei die Parameterwerte die Länge des Gurts (11) umfassen, der von dem Gurtstraffer (29) des Sicherheitsgurtsystems (10) eingezogen wird.

7. Sicherheitssystem nach einem der Ansprüche 4 bis 6, wobei die Parameterwerte die Straffungskraft umfassen, die von dem Gurtstraffer (29) des Sicherheitsgurtsystems (10) aufgebracht wird.

8. Sicherheitssystem nach einem der Ansprüche 4 bis 7, wobei die Parameterwerte ein Signal von einem Verschlusssensor (19) in dem Schloss (16) des Sicherheitsgurtsystems (10) umfassen.

9. Sicherheitssystem nach einem der Ansprüche 4 bis 8, wobei eine Erfassungsanordnung (19, 33) zum Messen von mindestens einem der Parameterwerte mit dem Schloss (16), der Verschlusszunge (14), dem Aufroller (13), dem Gurtstraffer (29) und/oder dem Kraftbegrenzer (28) des Sicherheitsgurtsystems (10) verbunden ist.

10. Sicherheitssystem nach Anspruch 9, wobei die Erfassungsanordnung (19, 33) einen Gurtabrollsensor (33) umfasst, insbesondere einen Drehsensor, der den Drehwinkel einer Spindel (25) des Aufrollers (13) misst.

11. Sicherheitssystem nach Anspruch 10, wobei der Gurtabrollsensor (33) mit dem Aufroller (13) des Sicherheitsgurtsystems (10) verbunden ist.

12. Sicherheitssystem nach einem der Ansprüche 9 bis 11, wobei die Erfassungsanordnung (19, 33) einen Schlossverschlusssensor (19) umfasst.

13. Sicherheitssystem nach einem der Ansprüche 4 bis 12, wobei der Gurtstraffer (29) des Sicherheitsgurtsystems (10) an dem Aufroller (13) des Sicherheitsgurtsystems (10) befestigt ist.

14. Sicherheitssystem nach einem der Ansprüche 1 bis 13, wobei der Kraftbegrenzer (28) des Sicherheitsgurtsystems (10) ein Torsionsstab-Kraftbegrenzer ist.

15. Kraftfahrzeug, das ein Sicherheitssystem (17) nach einem der vorhergehenden Ansprüche umfasst.

## Revendications

1. Système de sécurité (17) d'un occupant de véhicule, comprenant un système de ceinture de sécurité (10) avec un limiteur d'effort (28), un agencement de capteurs d'impact (20), un émetteur sans fil (22) monté sur le véhicule, et une unité de traitement de signal (18) programmée pour commander, après avoir reçu un signal d'impact dudit agencement de capteurs d'impact (20), ledit émetteur (22) pour transmettre des informations à un récepteur externe, ladite unité de traitement de signal (18) étant programmée pour générer lesdites informations destinées à être transmises sur la base de valeurs de paramètre du système de ceinture de sécurité (10), **caractérisé en ce que** lesdites valeurs de paramètre comprennent des valeurs de paramètre prédéterminées, et **en ce que** ladite unité de traitement de signal (18) est programmée pour générer lesdites informations destinées à être transmises pour contenir, en tant que valeur de paramètre prédéterminée, la force de limitation de charge appliquée par et étant une caractéristique du limiteur d'effort (28) du système de ceinture de sécurité (10).

2. Système de sécurité selon la revendication 1, lesdites valeurs de paramètre comprenant d'autres valeurs de paramètre prédéterminées.

3. Système de sécurité selon la revendication 1 ou 2, lesdites valeurs de paramètre comprenant des valeurs de paramètre mesurées.

4. Système de sécurité selon l'une quelconque des revendications précédentes, ledit système de ceinture de sécurité (10) comprenant un rétracteur (13), une languette de verrouillage (14), une boucle (16) et un prétendeur (29).

5. Système de sécurité selon la revendication 4, lesdites valeurs de paramètre comprenant la longueur de la ceinture (11) relâchée du rétracteur (13) du système de ceinture de sécurité (10).

6. Système de sécurité selon la revendication 4 ou 5, lesdites valeurs de paramètre comprenant la longueur de la ceinture (11) rétractée par le rétracteur (9) du système de ceinture de sécurité (10).

7. Système de sécurité selon l'une quelconque des revendications 4 à 6, lesdites valeurs de paramètre comprenant la force de prétension appliquée par le prétendeur (29) du système de ceinture de sécurité (10).

8. Système de sécurité selon l'une quelconque des revendications 4 à 7, lesdites valeurs de paramètre comprenant un signal d'un capteur de verrouillage (19) dans la boucle (16) du système de ceinture de sécurité (10).

9. Système de sécurité selon l'une quelconque des revendications 4 à 8, un ensemble de détection (19, 33) pour mesurer au moins l'une desdites valeurs de paramètre étant raccordé à la boucle (16), à la languette de verrouillage (14), au rétracteur (13), au prétendeur (29) et/ou au limiteur d'effort (28) du système de ceinture de sécurité (10).

10. Système de sécurité selon la revendication 9, ledit ensemble de détection (19, 33) comprenant un capteur de relâchement de ceinture (33), en particulier un capteur de rotation mesurant l'angle de rotation d'une broche (25) du rétracteur (13).

11. Système de sécurité selon la revendication 10, ledit capteur de relâchement de ceinture (33) étant raccordé au rétracteur (13) du système de ceinture de sécurité (10).

12. Système de sécurité selon l'une quelconque des revendications 9 à 11, l'ensemble de détection (19, 33) comprenant un capteur de verrouillage de boucle (19).

13. Système de sécurité selon l'une quelconque des revendications 4 à 12, le prétendeur (13) du système de ceinture de sécurité (10) étant monté sur le rétracteur (13) du système de ceinture de sécurité (10).

14. Système de sécurité selon l'une quelconque des revendications 1 à 13, le limiteur d'effort (28) du système de ceinture de sécurité (10) étant un limiteur de charge à barre de torsion.

15. Véhicule à moteur comprenant un système de sécurité (17) selon l'une quelconque des revendications précédentes.
